Europäisches Patentamt

European Patent Office

Office européen des brevets

(19)

(11) Publication number: **0 051 487**
**A1**

(12) **EUROPEAN PATENT APPLICATION**

(21) Application number: **81305214.9**

(22) Date of filing: **02.11.81**

(51) Int. Cl.³: **F 02 G 5/02**
**F 01 K 21/04, F 02 C 3/30**

(30) Priority: **04.11.80 JP 154797/80**

(43) Date of publication of application:
**12.05.82 Bulletin 82/19**

(84) Designated Contracting States:
**CH DE FR GB IT LI SE**

(71) Applicant: **MITSUBISHI GAS CHEMICAL COMPANY, INC.**
**5-2, Marunouchi 2-chome Chiyoda-Ku**
**Tokyo(JP)**

(72) Inventor: **Nakamura, Hiromi**
**12-17, Nishiyama 2-chome**
**Kashiwa-shi Chiba-ken(JP)**

(74) Representative: **Coleman, Stanley et al,**
**MATHYS & SQUIRE 10 Fleet Street**
**London EC4Y 1AY(GB)**

(54) Heat exchanging system for a heat engine using compressed gaseous fuel as fuel.

(57) A heat exchanging system for a heat engine wherein compressed air alone or gas including air as the main part thereof is used as a gaseous combustion supporting medium, working mixture, or the like and compressed gaseous fuel is used as fuel, the system being characterized in that heat recovery is accomplished by a utilization of a multi-phase mixture which is obtained by adding liquid phase water to the compressed gaseous fuel or the gaseous fuel and a part of or the whole of the compressed air or the gas including air as the main part thereof or by contacting the former with the latter, or heat recovery is accomplished while the multi-phase mixture is produced within a heat exchanger with adding the former to the latter or contacting the former with the latter.

- 1 -

HEAT EXCHANGING SYSTEM FOR A HEAT ENGINE
USING COMPRESSED GASEOUS FUEL AS FUEL

The present invention relates to a novel heat exchanging system for a heat engine using compressed gaseous fuel as fuel, and more particularly, to a heat exchanging system wherein compressed air alone or gas including air as the main part thereof is used as a gaseous combustion supporting medium, working mixture, or the like and compressed gaseous fuel is used as fuel, the system being characterized in that heat recovery is accomplished by a utilization of a multi-phase mixture which is obtained by adding liquid phase water to the compressed gaseous fuel or the gaseous fuel and a part of or the whole of the compressed air or the gas including air as the main part thereof or by contacting the former with the latter, or heat recovery is accomplished while the multi-phase mixture is produced within a heat exchanger with adding the former to the latter or contacting the former with the latter.

In a heat engine wherein compressed oxygen, air or gas including air as the main part thereof (this will be referred hereafter to as "air") is used as a gaseous combustion supporting medium, motive fluid or the like (this will be referred to hereafter as "gaseous medium"), air serves as a combustion supporting medium as well as working mixture or motive fluid. Usually, the quantity of air supplied is several times or more the amount needed to burn.

The heat exchanging system of the present invention make it possible to recover heat from a heat engine with high thermal efficiency. The novel heat exchanging system is combined with heat cycle so that the partial pressure of the steam in the compressed gaseous fuel and compressed air, if it is needed, is increased, and this steam acts as a substantial part of the motive fluid which reduces the quantity of air to be compressed which means less energy is required for compression as well as improving the thermal effectiveness.

In order to make the present invention easy to understand we will describe using a gas turbine engine as an example.

In the prior art, recovery of heat from exhaust gas of a gas turbine cycle is carried out by preheating compressed air or vaporized heat medium by use of a boiler which uses exhausted heat, or recovery of refrigeration energy by means of absorption refrigeration cycle.

The recovery of heat energy from exhaust gas is one of the important factors in improving the thermal efficiency not only of gas turbine engines but of all heat engines.

The recovery of heat energy from the exaust gas of the gas turbine cycle by means of preheating of air is one of the most commonly used methods. However, this method has the following disadvantages.

First the air is compressed adiabatically so that the temperature of the air may, depending upon the compression ratio, rise to 200°C or higher, or sometimes to 300°C or higher. The temperature of the discharged gas becomes the above mentioned high temperature of compressed gas plus the logarithmic mean temperature difference (LMTD) of generator, i.e. 30°C-50°C. It is impossible to recover heat from the heat engine at such a thermal level or therebelow and, therefore the amount of recovered heat is significantly limited.

Second, the heat transfer coefficient is low since in the present type of regenerator --the so called  gas-gas type regenerator--, there is a pressure loss due to the necessity of a large heat surface area. The large heat surface area lowers thermal efficiency and also increases the cost of the equipment.

There are several methods for recovering the heat energy in the exhaust gas of a gas turbine cycle by means of an exhaust heat boiler which uses heat medium; however, the efficiency of these methods depends on the possibility of using the recovered heat energy.

If there is no demand for all for the recovered heat energy, this energy is generally transformed into another form of energy through the Rankine cycle using a vaporized heat medium. This method, which is generally called "combined cycle of gas turbine-steam turbine", has the disadvantage that transfer of heat energy to heat medium through boiler heated by exhaust heat is accompanied with loss of heat so that effective energy decreases. If the heat load is to be restricted to a certain level, the quantity of recovered heat energy is restricted. Generally speaking, the thermal level of heat recovered from exhaust gas is too low to enable getting high transformation efficiency.

There is an additional disadvantage in that additional costs such as cost of the heat medium itself, cost of the equipment for said heat medium, pressurizing and cooling equipment for environmental protection and high operating costs are required.

There is another method of recovering heat energy from exhaust gas of a gas turbine cycle which is carried out by using an absorption-type refrigerator to obtain refrigeration energy. However, if refrigeration energy is not available, this method also has many problems. As power transformation (conversion) by means of the combained cycle of gas turbine-cycle and refrigeration cycle is essentially the same as the combained cycle of gas turbine cycle and Rankine cycle, improvement of thermal efficiency could not be expected.

The object of the present invention is to provide a heat engine with high thermal efficiency by means of a novel and improved heat exchanging system and heat engine without the demerits of the conventional method of heat recovery for exhaust gas.

The present invention accomplishes the above-mentioned objects by using a heat exchanging system for a heat engine wherein compressed air alone or gas including air as the main part thereof is used as a gaseous combustion supporting medium, working mixture, or the like and compressed gaseous fuel is used as fuel, the system being characterized in that heat recovery is accomplished by a utilization of a multi-phase mixture which is obtained by adding liquid phase water to the compressed gaseous fuel or the gaseous fuel and a part of or the whole of the compressed air or the gas including air as the main part thereof or by contacting the former with the latter, or heat recovery is accomplished while the multi-phase mixture is produced within a heat exchanger with adding the former to the latter or contacting the former with the latter.

For a further understanding of the nature and advantages of the present invention, reference should be made to the remaining portions of the specification and to the attached drawings.

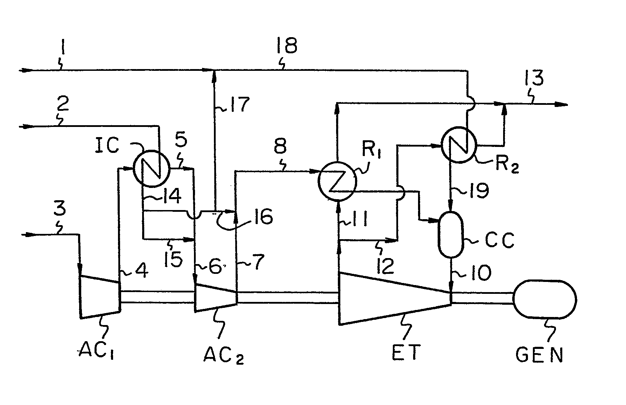

The figure is a schematic block diagram of a preferred embodiment according to the present invention.

Now, we explain the present invention in accordance with only the gas turbine engine for easy understanding.

The figure shows a preferred embodiment according to the present invention which comprises two-step heat regeneration, two-step air compression, one-step intermediate cooling, and a one-step turbine.

Air is admitted to the first air compressor AC1 through absorbing conduit 3 and is compressed adiabatically, causing the temperature and the pressure thereof to rise, and then the air is discharged from outlet conduit 4 as an intermediate-step compressed air. Water under pressure is preheated in an intermediate cooler IC through a conduit 2, and is introduced through a conduit 14 into a conduit 15, 16 and 17 and further introduced into intermediate compressed air 6, compressed air 7 and compressed gaseous fuel 1, respectively. Injection of water is conducted by either a method in which water is mixed and evaporated in a mixing chamber and then is ejected or a method in which water is injected into conduits 5, 7 and 1, or further into a regenerators R1, R2 directly. In either method, evaporation of water and fall of air temperature occur upon the injection of water.

Intermediate compressed air into which water is injected is introduced to the second air compressor AC2 through an absorbing conduit 6. In this stage it is preferable that there be no liquid phase water. Air which is compressed adiabatically by the second air compressor AC2 is mixed with water passing through the conduit 16 by means of the outlet conduit 7, and then is admitted to the regenerator R1 through a conduit 8. In the regenerator R1, heat recovery is carried out by means of sensible heat transfer with rising of temperature when liquid phase water does not exist at the compressed air side thereof, and heat recovery is carried out by means of both latent heat transfer with evaporation of water and sensible heat transfer with rising of air temperature when liquid phase water coexists with air. Gaseous medium which is already recovered in the regenerator R1 is then admitted into the combustion chamber CC through a conduit 9. The combustion chamber CC is provided with gaseous fuel which is passed through the conduit 1 and is mixed with pressured water from the conduit 17, and then is subjected to heat recovery in the regenerator R2 by means of the conduit 18. Compressed air functions as a gaseous working mixture such as combustion supporting medium, refrigerant, diluent or the like and the temperature thereof is elevated to the predetermined value by combustion of gaseous fuel, and then is admitted into an output gas turbine GT through a conduit 10. In the gas turbine, the gaseous fuel expands adiabatically and produces work, a part of which is adapted to be consumed in the first and second air compressor AC1 and AC2, and the remainder of which is adapted to be recovered as the driving force of a generator GEN. Exhaust gas from the gas turbine GT is admitted into the regenerator R1 through the conduit 11 and is subjected to heat recovery therein. A part of the exhaust gas branches off from the conduit 11 by means of a conduit 12 and is subjected to heat recovery in the regenerator R2. Waste gas from which heat recovery is carried out is discharged to atmosphere through a conduit 13.

The features of the present invention are, as is apparent from the accompanying drawing, that heat recovery is accompalished by the system comprising a mixture which is obtained by contacting compressed gaseous fuel or compressed air, if it is needed, with water or adding the former to the latter. Thus, the system is used as a heated gaseous working medium by combustion so that driving work is produced and a part of the driving work is used to compress the air.

The present system constituted by the above-mentioned features includes a system wherein a multi-step gas compressor, expansion turbine or some other component is located. In connection with the method of heat recovery, the present system includes, depending upon thermal level of heat recovery, a method wherein heat recovery of exhaust gas is carried out by means of only mixture of gaseous fuel and water, a method wherein heat recovery is carried out up to high temperature level, by means of both mixture of gaseous fuel and water, and air or any other method or condition in which the method comprises a system in which water is added to gaseous fuel as a constitutional element.

The construction of a heat engine embodying the present invention has the above mentioned features and is accompanied with the following advantages.

Firstly, the heat exchanging system according to the present invention using mixture of compressed gaseous fuel and water can recover heat at a lower temperature than a system wherein heat recovery is carried out by means of only compressed gaseous fuel.

Secondly, the present system can recover a larger amount of heat due to the existence of the large amount of recovering medium. This results in substantial simplification of the design of the heat exchanging system or in extension in scope of thermal level for heat recovery.

Third, when air is used as a combustion supporting gas or medium gas, less air needs to be compressed.

A fourth advantage is that, compression of air is practiced adiabatically and air compressed under adiabatic conditions has a low persentage of humidity to saturated humidity due to rise of temperature and upon the addition of water or the contact of water it changes to steam, which results in the falling of air temperature with an increase in the quantity of steam occuring adiabatically. In this point, while the relation between the decrease in volume due to the fall of temperature and increase of volume due to the increase of moles by the increase of the quantity of steam depends upon compression ratio or temperature condition, there are some conditions under which the PV value can be selected at a smaller value if water is contacted with or added to the air. This means that a multi-step compression system wherein cooling by heat exchange is carried out and water is contacted with or added at intermediate steps can decrease the power for compression more than one-step adiabatic compression.

In the above case, while energy needed to elevate pressure decreases, the quantity of compressed gas becomes large corresponding to the increase of steam. An excess of air over the amount of air indispensable for complete combustion is used as a gaseous working mixture in the gas turbine cycle, as described above, and the increased amount of steam in the compressed gaseous fuel and compressed gas makes it possible to decrease the quantity of air to be elevated in pressure. Furthermore, the specific heat of steam is 0.515 Kcal/Kg°C (mean specific heat of 25 - 1,000°C) and the specific heat of air is 0.262 Kcal/Kg°C (mean specific heat of 25 - 1,000°C); therefore the effect of steam as a working medium is roughly two times that of air for a unit weight. Thus, the decrease in amount of air to be compressed is in proportion to the difference in specific heat between them. This results in a significant decrease in the quantity of air to be compressed and therefore a second advantage of the present invention is that both energy required for compressing air and the whole weight of the gaseous working mixture decrease. This improvement of thermal efficiency makes it possible to increase output with a more compact unit.

The present invention has still another advantage wherein perfect exhaust gas or heat which cannot be recovered for work is exhausted into the atmosphere or environment as mixture gas of combustion gas, air and steam. In the heat recovery system using heat medium or the like, a cooling system for discharge of heat is necessary in order to recirculate the heat medium, and this additional equipment, such as storage cavity for heat medium and for operation, adds to the cost. However, in the present invention it is very easy to discharge heat directly into a cold body.

Another advantage of the present invention is the decrease of NOx which is included in the exhaust gas. Generally speaking, the higher the maximum temperature in the combustion chamber, the higher the thermal efficiency of heat engine such as a gas turbine. But the elevation of temperature normally causes the concentration of NOx in exhaust gas to increase. It is well known to those skilled in the art that in a combustion system in which water and air coexist the concentration of NOx decreases, and the present invention has the effect of decreasing NOx. Thus, if the concentration of NOx to be permitted is substantially the same, the thermal efficiency of the present invention is improved significantly by elevating the maximum temperature.

As described above in detail, the present invention provides a heat engine which may be considered as an integration of heat engine such as gas turbine cycle and Rankine cycle, wherein compressed air or gas including air in the main part thereof is used as combustion supporting medium or working mixture, liquid phase water is contacted with or added to said gas to recover heat so that the system is combined therewith in order to support the heat exchanging system.

The present invention is of great significance in that it improves the thermal efficiency of heat engines remarkably by providing a new and improved method which uses gaseous fuel and air, if it is needed, and liquid phase water.

We claim:

1.    A heat exchanging system for a heat engine wherein compressed air alone or gas including air as the main part thereof is used as a gaseous combustion supporting medium, working mixture, or the like and compressed gaseous fuel is used as fuel, the system being characterized in that heat recovery is accomplished by a utilization of a multi-phase mixture which is obtained by adding liquid phase water to the compressed gaseous fuel or the gaseous fuel and a part of or the whole of the compressed air or the gas including air as the main part thereof or by contacting the former with the latter, or heat recovery is accomplished while the multi-phase mixture is produced within a heat exchanger with adding the former to the latter or contacting the former with the latter.

2.    The system of claim 1 wherein the compression is carried out by a multiplicity of gas compressors and the gas compressed in intermediate steps is cooled by liquid phase water which is to be added thereto or contacted therewith.

3.    The system of Claim 1 wherein the compression of gaseous fuel is carried out by a multiplicity of gas compressors and the gas compressed in intermediate steps is cooled by the liquid phase water which is to be added thereto or contacted therewith.

4.    The system of Claim 1 or 2 wherein the liquid phase water which is to be added to or contacted with said gaseous fuel or the like is used as a heat recovering medium and is preheated.

European Patent
Office

**EUROPEAN SEARCH REPORT**

Application number

EP 81 30 5214

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | FR - E - 60 902 (RATEAU)<br>* Page 1, right-hand column, paragraph 2 to page 3, left-hand column, paragraph 2 *<br>& FR - A - 1 007 140<br><br>-- | 1-4 | F 02 G 5/02<br>F 01 K 21/04<br>F 02 C 3/30 |
| X | CH - A - 457 039 (BBC)<br>* Column 1, line 1 to column 2, line 39 *<br><br>-- | 1-3 | |
| EX | EP - A - 0 041 873 (MITSUBISHI)<br>* Entire document *<br><br>-- | 1-4 | TECHNICAL FIELDS SEARCHED (Int.Cl. 3)<br><br>F 02 G<br>F 01 K<br>F 02 C<br>F 02 B |
| PX | EP - A - 0 035 822 (TNO)<br>* Page 9, lines 1-35 *<br><br>---- | 1,2 | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 04-02-1982 | WASSENAAR |

EPO Form 1503.1 06.78